# EUROPÄISCHE PATENTSCHRIFT

(11) **EP 2 714 323 B1**
(45) Veröffentlichungstag und Bekanntmachung des Hinweises auf die Patenterteilung: **12.04.2017**
(21) Anmeldenummer: 12722079.6
(22) Anmeldetag: 14.05.2012
(51) Int. Cl.: B23K 26/24, B23K 37/04, B23K 26/32, B23K 26/03

(54) **VERFAHREN UND VORRICHTUNG ZUM FÜGEN VON BAUTEILEN MITTELS ENERGIESTRAHLSCHWEISSENS**
METHOD AND DEVICE FOR JOINING COMPONENTS BY MEANS OF ENERGY BEAM WELDING
PROCÉDÉ ET DISPOSITIF DESTINÉS À L'ASSEMBLAGE DE PIÈCES PAR SOUDAGE PAR FAISCEAU D'ÉNERGIE

(30) Priorität: 03.06.2011 DE 102011103246
(43) Veröffentlichungstag der Anmeldung: 09.04.2014
(73) Patentinhaber: VOLKSWAGEN AKTIENGESELLSCHAFT, 38440 Wolfsburg (DE)
(72) Erfinder: GRAMSCH, Mario, 38446 Wolfsburg (DE); WEFERLING, Norbert, 38179 Schwülper (DE)
(86) Internationale Anmeldenummer: PCT/EP2012/002067
(87) Internationale Veröffentlichungsnummer: WO 2012/163477

(56) Entgegenhaltungen:
- EP-A2- 1 238 748
- DE-A1-102006 040 514
- DE-U1- 20 221 034
- JP-A- 2007 038 267
- JP-A- 2010 207 829

## Beschreibung

Die Erfindung betrifft ein Verfahren sowie eine Vorrichtung zum Fügen eines ersten Bauteils mit einem zweiten Bauteil mittels eines Energiestrahlschweißens gemäß dem Oberbegriff der Ansprüche 1 und 8 (siehe, z.B., DE 10 2006 040 514 A1).

Das Fügen von Bauteilen mittels Energiestrahlschweißens ist bekannt. Der Energiestrahl kann beispielsweise einen Laserstrahl aufweisen, der derartig auf eine Oberfläche eines der Bauteile gerichtet wird, dass ein bereichsweises Aufschmelzen und damit ein Verschweißen der Bauteile erfolgt. Es ist bekannt, dass die bereichsweise verdampfende Beschichtung einen Gasstrom erzeugt, und dieser durch einen Fügespalt abgeführt wird. Der Fügespalt kann beispielsweise durch eine elastische Verformung eines der Bauteile, einen zwischen den Bauteilen angeordneten Abstandshalter und/oder eine Geometrie entsprechender Fügepartner beziehungsweise der Bauteile vorgehalten werden. Außerdem ist es bekannt, die Verdampfung der Beschichtung und damit eine Poren- und/oder Lochbildung im Bereich einer Fügestelle mittels einer Dosierung der mittels des Energiestrahlschweißens zugeführten Wärmeenergie zu beeinflussen. Die DE 10 2006 035 517 B3 betrifft eine Spanneinrichtung zum Spannen von Blechplatinen in einer Schweißvorrichtung, die zumindest einen verstellbaren Spannhebel aufweist, der über ein Druckstück gegen die Blechplatinen drückt. Es ist zwischen dem Druckstück und dem Spannhebel ein Ausgleichsfederelement geschaltet, das das Druckstück elastisch am Spannhebel lagert. Es stellt sich ein Zink-Entgasungsspalt in einer Größenordnung von 0,2 mm ein. Die DE 100 2004 044 601 A1 betrifft eine Schweißvorrichtung zum Verbinden von zumindest teilweise überlappend angeordneten beschichteten, insbesondere verzinkten Blechen. Die Schweißvorrichtung weist zum Verschweißen der Bleche einen in eine Schweißrichtung verfahrbaren Laserstrahl auf. In Schweißrichtung seitlich neben dem Laserstrahl sind die Bleche zwischen zwei annähernd mit einer Schweißvorschubgeschwindigkeit mit laufenden Spannelementen angeordnet, welche eine lokale Verformung im Bereich einer Schweißstelle erzeugen. Durch diese lokale Verformung wird ein Entgasungsspalt zum Entweichen der beim Schweißen entstehenden Gase gebildet. Es wird eine Verformung und damit ein Entgasungsspalt simultan zum eigentlichen Schweißprozess erzeugt. Die DE 10 2006 040 514 A1 betrifft ein Verfahren zur Herstellung einer Doppelblechstruktur durch Verschweißen eines ersten Blechs aus Metall mit mindestens einem zweiten Blech aus Metall, wobei beide Bleche vorzugsweise aus Stahl oder einer Stahllegierung bestehen, in das zweite Blech mindestens eine Sicke eingeformt ist, das zweite Blech während des Verschweißens mit der Auswölbung auf dem ersten Blech aufliegt und über eine Schweißnaht im Sickengrund mit dem ersten Blech verschweißt wird. Im Bereich der Sicke weist die Doppelblechstruktur vor dem Verschweißen einen lokalen Nullfügespalt auf. Die DE 102 61 507 A1 schafft ein Verfahren zum Verbinden zweier Stahlbleche, von denen zumindest eines eine Beschichtung mit einem niedrigeren Schmelzpunkt als das Stahlblechmaterial aufweist, durch eine Laserschweißnaht, wobei die Stahlbleche vor ihrem Verschweißen im Laserschweißnahtbereich unter einem spitzen Winkel aufeinanderstoßend angeordnet werden und die Laserschweißnaht als Kehlnaht ausgebildet wird, wobei ferner ein erstes Stahlblech mit einem Hauptteil und einem Randflansch, der über eine Krümmung ins Hauptteil übergeht, und ein zweites Stahlblech mit einer Stoßkante so angeordnet werden, dass die Stoßkante im Verlauf der Krümmung oder zumindest in der Nähe des Endes der Krümmung zum Hauptteil hin gegen das erste Stahlblech angelegt wird, und wobei zudem die Kehlnaht zwischen der Stoßkante und dem ersten Stahlblech im Verlauf der Krümmung oder zumindest in der Nähe des Endes der Krümmung zum Hauptteil hin gebildet wird. Die DE 10 2004 041 502 A1 betrifft ein Überlappschweißverfahren mittels Strahlschweißung an beschichteten Blechen, insbesondere ein Laserstrahlschweißverfahren für verzinkte Stahlbleche, wobei die Beschichtung eine wesentlich niedrigere Schmelz- und Verdampfungs- beziehungsweise Verbrennungstemperatur als der Blechwerkstoff aufweist und im Überlappungsbereich mindestens eine beschichtete Gegenfläche mit einem Fügespalt vorliegt. Es liegt mindestens ein Nullfügespalt mit plan- oder formangepasst aneinander liegenden Gegenflächen im Überlappungs- und Schweißbereich vor und die jeweiligen Parameter des Energiestrahls werden mit einer Anregungsfrequenz in einem Frequenzfenster um eine spezielle Anregungsfrequenz einer beim Schweißvorgang im Schmelzbad gebildeten Dampfkapillare seitlich variiert. Ferner ist es bekannt, beim Fügen mittels einer Schraubverbindung ein Anziehmoment beziehungsweise einen Verlauf des Anziehmoments zu überwachen und/oder zu analysieren. Dies kann beispielsweise mittels eines Drehmomentschlüssels oder einer elektronischen Messvorrichtung erfolgen. Die DE 42 14 354 C2 betrifft ein Verfahren zum Herstellen einer Schraubverbindung zwischen zwei Bauteilen, wobei der Schraubvorgang unter Messung von Drehmoment und/oder Drehwinkel erfolgt und bei Erreichung eines durch Drehmoment- oder Drehwinkelmesswerte beschreibbaren Abschaltpunktes beendet wird, wobei der Fügepunkt des Schraubvorganges festgestellt wird und der Schraubvorgang bis zur Erreichung eines, von dem Fügepunkt aus gemessenen, vorgebbaren Drehmoment- oder Drehwinkelmesswerts beschreibbaren Abschaltpunktes fortgesetzt wird.

Aus der JP 2010207829A ist bereits ein Verfahren bekannt, bei dem die zu fügenden Platten stets in ihren Endbereichen durch eine spezielle konstruktive Struktur der Platten getrennt sind. Die Bildung eines Nullspalts ist nicht vorgesehen. Es wird beschrieben, dass bei der Bewegung der Druckstöcke verschiedene Punkte mit geänderten Steigungen des Kraft-Weg-Diagramms auftreten, die verwendet werden um den Kontaktzustand der Platten zu charakterisieren.

Aufgabe der Erfindung ist es, ein verbessertes Fügen eines ersten Bauteils mit einem zweiten Bauteil mittels eines Energiestrahlschweißens zu ermöglichen, wobei zumindest eines der Bauteile eine während des Energiestrahlschweißens bereichsweise verdampfende Beschichtung aufweist, zumindest eines der Bauteile einen Schweißflansch aufweist und zwischen dem ersten und dem zweiten Bauteil ein geschlossener Fügespalt gebildet werden kann, wobei auf einfache Art und Weise und unabhängig von einer vorher bekannten Geometrie der Bauteile ein definierter Fügespalt einstellbar ist, sodass ein Einsinken und/oder eine zu schwache Entgasung einer beim Fügen auftretenden Fügestelle vermieden werden können.

Die Aufgabe ist mit den Merkmalen der unabhängigen Ansprüche 1 und 8 gelöst.

Bei dem Verfahren zum Fügen eines ersten Bauteils mit einem zweiten Bauteil mittels eines Energiestrahlschweißens, ist insbesondere Vorgesehen, dass zumindest eines der Bauteile eine während des Energiestrahlschweißens bereichsweise verdampfende Beschichtung aufweist, mit Positionieren des ersten Bauteils und des zweiten Bauteils zwischen einem ersten Druckstück und einem zweiten Druckstück, Annähern der Druckstücke aneinander und dabei Analysieren eines eine zwischen den Druckstücken auftretende Kraft charakterisierenden Verlaufs, Einstellen einer Relativposition der Druckstücke zueinander in Abhängigkeit der Analyse und Fügen der Bauteile mittels des Energiestrahlschweißens bei der eingestellten Relativposition der Druckstücke. Bei einem für das Energiestrahlschweißen verwendeten Energiestrahl kann es sich beispielsweise um einen Laserstrahl handeln. Der Laserstrahl kann sichtbares Licht und/oder eine Wärmestrahlung aufweisen. Grundsätzlich kann es sich bei dem Energiestrahl um eine beliebige Form von gerichteter Energie zum Erzeugen von Wärme auf einer Auftreffstelle eines der Bauteile handeln. Insbesondere kann es sich um eine beliebige Strahlung, insbesondere eine elektromagnetische Strahlung handeln, die auf die Auftreffstelle beziehungsweise eine Fügestelle der Bauteile gerichtet wird. Unter einem Verlauf kann insbesondere eine Messkurve verstanden werden. Insbesondere kann unter dem Verlauf eine beliebige, die Kraft kennzeichnende mehrdimensionale, insbesondere zweidimensionale Größe, insbesondere einen Verlauf über einer Zeit und/oder einem Weg verstanden werden. Insbesondere kann es sich um eine Antriebskraft, einen Stromfluss, eine Spannung, ein Drehmoment, ein Drehmoment einer die Druckstücke aufweisenden Spannzange, eine Antriebskraft eines Linearantriebs, eines Sensorsignals, jeweils über einem Weg der Druckstücke und/oder einer Zeit handeln. Vorteilhaft kann die Analyse des Verlaufs unabhängig von einer Vorkenntnis einer Geometrie, insbesondere einer Dicke, des ersten Bauteils und des zweiten Bauteils erfolgen. Vorteilhaft kann die Analyse des Verlaufs zum Einstellen der Relativposition der Druckstücke zueinander hergenommen werden. Vorteilhaft ergibt sich aufgrund der so eingestellten Relativposition während des Fügens der Bauteile ein von geometrischen Beschaffenheiten des ersten Bauteils und des zweiten Bauteils unabhängiger Fügespalt. Über dem so definiert eingestellten Fügespalt kann eine Entgasung der Fügestelle erfolgen, vorteilhaft ohne dadurch eine Qualität der Fügestelle, beispielsweise durch ein Einstellen eines zu großen Fügespaltes, der ein Einsinken der Fügestelle bewirken würde, oder eines zu kleinen Fügespaltes, der eine zu schwache Entgasung bedeuten würde, erfolgen. Vorteilhaft kann eine Entgasung durch ein an der Fügestelle auftretendes Schmelzbad vermieden werden. Die verdampfende Beschichtung kann beispielsweise Zink aufweisen und/oder aus Zink bestehen. Unter Verdampfen kann ein Übergehen von einem festen und/oder flüssigen Aggregatszustand in einen gasförmigen Zustand verstanden werden. Insbesondere kann das Verdampfen durch Erwärmung verursacht werden, wobei ein elementarer Zinkdampf entsteht. Alternativ und/oder zusätzlich kann unter Verdampfen auch eine Verbrennung der Beschichtung verstanden werden, wobei diese vor einer Oxidation mit einem vorhandenen Luftsauerstoff verdampft und über den Fügespalt sich bildende Verbrennungsgase anstelle des elementaren Zinkdampfs abgeführt werden können.

Es ist ferner ein Ermitteln einer Steigungsänderungsstelle des Verlaufs mittels des Analysierens und ein Auseinanderbewegen der Druckstücke um einen definierten Wert und ausgehend von einer weiteren Relativposition der Druckstücke zueinander, an der die Steigungsänderungsstelle des Verlaufs auftritt, vorgesehen. Unter einer Steigungsänderungsstelle kann eine Unstetigkeitsstelle einer ersten Ableitung des Verlaufs verstanden werden. Alternativ und/oder zusätzlich kann unter der Steigungsänderungsstelle auch ein Bereich und/oder ein Intervall des Verlaufs verstanden werden, an dem sich die erste Ableitung des Verlaufs signifikant von einem ersten Wert, beispielsweise einem ersten niedrigeren Wert in einen zweiten Wert, beispielsweise einen zweiten höheren Wert verändert. Dabei genügt es, wenn die erste Ableitung des Verlaufs vor der Steigungsänderungsstelle und nach der Steigungsänderungsstelle im Mittel signifikant unterschiedliche Werte aufweist. Vorteilhaft tritt die Steigungsänderungsstelle des Verlaufs während des Annäherns der Druckstücke aneinander auf, wobei diese vorteilhaft mittels elastomechanischer Gesetze interpretiert werden kann. Es wurde erkannt, dass die Steigungsänderungsstelle beispielsweise dann auftritt, wenn sich die Bauteile zu berühren beginnen. Vorteilhaft kann so auf einfache Art und Weise gemessen werden, bei welcher Relativposition eine erste Berührung der Bauteile erfolgt. Falls für ein weiteres Annähern der Bauteile eine elastische Verformung derselben auftritt, ist es denkbar, dass eine weitere Steigungsänderungsstelle dann auftritt, wenn diese sich flächig berühren. Vorteilhaft kann mittels der Steigungsänderungsstelle des Verlaufs auf die weitere Relativposition der Bauteile zueinander geschlossen werden, wobei diese beispielsweise einem Nullfügespalt entspricht. Vorteilhaft kann dann aus das Auseinanderbewegen der Druckstücke um den definierten Wert und ausgehend von der weiteren Relativposition erfolgen. In Kenntnis der weiteren Relativposition kann auf einfache Art und Weise die für das spätere Fügen notwendige Relativposition der Druckstücke zueinander eingestellt werden. Vorteilhaft ergibt sich bei der so eingestellten Relativposition der wünschenswerte definierte Fügespalt.

Bei dem Verfahren ist vorgesehen, dass eines der Bauteile einen Schweißflansch aufweist, mit Berühren der Bauteile an einem Knick des Schweißflansches und dabei Erzeugen eines sich von dem Knick ausgehend konisch öffnenden Fügespalts zwischen den Bauteilen, Schließen des Fügespalts unter einer zumindest teilelastischen Verformung des Schweißflansches mittels des Annäherns der Druckstücke aneinander, wobei die ermittelte Steigungsänderungsstelle bei gerade geschlossenem Fügespalt auftritt und definiertes Öffnen des Fügespalts mittels des Einstellens der Relativposition. Vorteilhaft kann das Schließen des Fügespalts entgegen Rückstellkräften der zumindest teilelastischen Verformung des Schweißflansches erfolgen. Dementsprechend kann vorteilhaft mittels der Rückstellkräfte das definierte Öffnen des Fügespalts mittels des Einstellens der Relativposition erfolgen. Das Einstellen der Relativposition erfolgt durch das Auseinanderbewegen der Druckstücke, insbesondere eines Zurückziehens eines der Druckstücke. Grundsätzlich ist es denkbar, nur eines der Druckstücke beweglich und das jeweils andere Druckstück feststehend auszuführen. Alternativ und/oder zusätzlich ist es denkbar, beide Druckstücke beweglich auszuführen. Vorteilhaft kann in Kenntnis der Steigungsänderungsstelle darauf geschlossen werden, dass der Fügespalt gerade geschlossen ist, also ein Nullfügespalt vorliegt. Unter dem Nullfügespalt kann verstanden werden, dass die Bauteile plan- und/oder formangepasst aneinander liegen. Alternativ und/oder zusätzlich ist es denkbar, eine weitere Steigungsänderungsstelle des Verlaufs mittels des Analysierens zu ermitteln, wobei die weitere Steigungsänderungsstelle dann auftritt, wenn sich die Bauteile während des Annäherns an dem Knick zu berühren beginnen.

Bei dem Verfahren ist ein Ermitteln einer weiteren Steigungsänderungsstelle, die bei einem Beginn der Berührung der Bauteile an dem Knick des Schweißflansches während des Annäherns auftritt und/oder ein Anlegen von zwei Tangenten an den Verlauf und/oder ein Ermitteln der Steigungsänderungsstelle als ein Schnittpunkt der Tangenten vorgesehen. Vorteilhaft kann eine erste Tangente an den Verlauf zwischen der Steigungsänderungsstelle und der weiteren Steigungsänderungsstelle und ein Anlegen einer zweiten Tangente jenseits der Steigungsänderungsstelle erfolgen. Vorteilhaft kann so als Schnittpunkt der Tangenten die Steigungsänderungsstelle ermittelt werden. Alternativ und/oder zusätzlich kann so auch die weitere Steigungsänderungsstelle ermittelt werden, beispielsweise als Schnittpunkt der ersten Tangente mit einer Wegachse des Kraft-Weg-Diagramms.

Bei einer Ausführungsform des Verfahrens ist ein Anlegen der Bauteile an das jeweilige Druckstück mittels eines während des Energiestrahlschweißens auftretenden Dampfdrucks der bereichsweise verdampfenden Beschichtung vorgesehen. Vorteilhaft können die Bauteile zunächst so weit aufeinander zu bewegt werden, bis diese sich im Bereich der Fügestelle flächig, also mit einem Nullfügespalt berühren, wobei dies mittels der Steigungsänderungsstelle des Verlaufs anzeigbar ist. Anschließend werden die Druckstücke wieder auseinanderbewegt, wobei sich zunächst die Bauteile, beispielsweise aufgrund einer Schwerkraft, nicht mitbewegen. Vorteilhaft kann jedoch aufgrund des auftretenden Dampfdrucks wieder ein Anlegen der Bauteile an das entsprechende Druckstück erfolgen, wobei sich automatisch der definierte, wünschenswerte Fügespalt einstellt.

Bei einer weiteren Ausführungsform des Verfahrens ist ein Vorspannen des zweiten Bauteils mittels einer Abschrägung des zweiten Druckstücks vorgesehen. Vorteilhaft kann mittels der Abschrägung ein definierter konischer Fügespalt zwischen den Bauteilen erzielt werden.

Bei einer weiteren Ausführungsform des Verfahrens ist ein Ermitteln des Verlauf als ein Kraft-Weg-Diagramm der Druckstücke vorgesehen. Vorteilhaft kann aufgrund des Verlaufes der Kraft über dem Weg der Druckstücke ermittelt werden, wann sich elastomechanische Änderungen der sich zwischen den Druckstücken befindlichen Bauteile ergeben, beispielsweise wenn Berührungen stattfinden, zumindest teilweise elastische Verformungen beginnen, beispielsweise ein Niederdrücken des Schweißflansches und/oder eine zumindest teilelastische bei einem planen Anlagekontakt der Bauteile auftretende Verformung derselben.

Bei einer weiteren Ausführungsform des Verfahrens ist ein Auseinanderbewegen der Druckstücke um den definierten Wert innerhalb zumindest eines Intervalls der folgenden Gruppe: 0,05 - 0,5 mm, 0,1 - 0,4 mm, 0,1 - 0,3 mm, 0,15 - 0,25 mm, vorzugsweise 0,2 mm, vorgesehen. Vorteilhaft kann dadurch eine vorteilhafte Dimensionierung des Fügespalts erzielt werden, bei dem noch kein Einfallen der Fügestelle, jedoch eine ausreichende Entgasung derselben, insbesondere ohne dass der Dampf durch das Schmelzbad abgeführt werden muss, erzielt werden.

Bei einer weiteren Ausführungsform des Verfahrens ist vorgesehen, dass eine Dicke und/oder ein Wärmedurchlasswiderstand des ersten Bauteils kleiner ist/sind als eine Dicke und/oder ein Wärmedurchlasswiderstand des zweiten Bauteils, mit: Richten eines Energiestrahls auf eine Rückseite des ersten Bauteils zum Fügen der Bauteile. Die der Rückseite gegenüberliegende Vorderseite des ersten Bauteils begrenzt den Fügespalt und ist gegenüberliegend einer entsprechenden Vorderseite des zweiten Bauteils angeordnet. Vorteilhaft kann ein Energieaufwand zum Durchführen des Energiestrahlschweißens aufgrund der geringeren Dicke und/oder des geringeren Wärmedurchlasswiderstands des ersten Bauteils verringert werden. Vorteilhaft muss insgesamt weniger Material aufgeschmolzen werden.

Die Erfindung betrifft außerdem eine Vorrichtung zum Fügen eines ersten Bauteils mit einem zweiten Bauteil mittels eines Energiestrahlschweißens gemäß den Merkmalen des unabhängigen Vorrichtungsanspruchs.

Die Vorrichtung ist alternativ und/oder zusätzlich eingerichtet, konstruiert, ausgeführt und/oder ausgestattet mit einer Software zum Durchführen eines vorab beschriebenen Verfahrens. Es ergeben sich die vorab beschriebenen Vorteile.

Weitere Vorteile, Merkmale und Einzelheiten ergeben sich aus der nachfolgenden Beschreibung, in der unter Bezug auf die Zeichnung ein Ausführungsbeispiel im Einzelnen beschrieben ist. Gleiche, ähnliche und/oder funktionsgleiche Teile sind mit gleichen Bezugszeichen versehen.

Es zeigen:
- Figur 1: eine schematische Schnittansicht einer teilweise dargestellten Vorrichtung zum Fügen von Bauteilen mittels eines Energiestrahlschweißens;
- Figur 2: ein Kraft-Weg-Diagramm eines mittels der in Figur 1 dargestellten Vorrichtung durchführbaren Schweißvorgangs; und
- Figur 3: ein Blockschaltbild eines Regelkreises zur Steuerung der in Figur 1 gezeigten Vorrichtung.

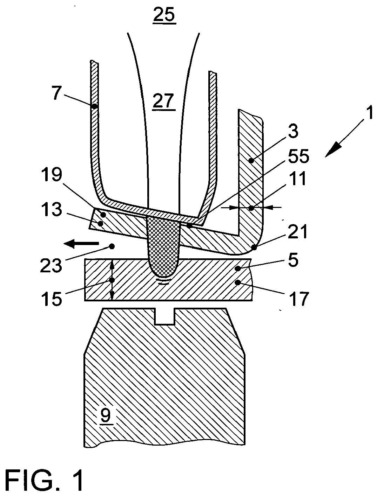

Figur 1 zeigt eine schematische Schnittansicht einer Vorrichtung 1 zum Fügen eines ersten Bauteils 3 mit einem zweiten Bauteil 5. Die Vorrichtung 1 ist in Figur 1 nur teilweise dargestellt.

Zumindest eines der Bauteile 3 und 5 weist eine nicht näher dargestellte Beschichtung auf. Die Beschichtung besteht vorzugsweise aus Zink, wobei die Bauteil 3 und 5 vorzugsweise aus einem Blech, insbesondere einem Stahlblech bestehen. Zum Fügen der Bauteile 3 und 5 ist es notwendig, ein Kernmaterial der Bauteile 3 und 5, insbesondere Stahl, aufzuschmelzen, wobei ein Verdampfen der Beschichtung, beispielsweise des Zinks, stattfindet.

In der Darstellung gemäß Figur 1 sind das erste Bauteil 3 und das zweite Bauteil 5 zwischen einem ersten Druckstück 7 und einem zweiten Druckstück 9 angeordnet. Das zweite Druckstück 9 ist als feststehendes Druckstück und das erste Druckstück 7 als bewegliches Druckstück ausgeführt. Durch eine entsprechende Bewegung des ersten Druckstücks 7 können diese wahlweise aneinander angenähert oder voneinander entfernt werden, wobei dadurch das erste Bauteil 3 und das zweite Bauteil 5 relativ zueinander positionierbar sind. Das erste Druckstück 7 kann mittels einer nicht näher dargestellten Antriebsvorrichtung, beispielsweise eines elektromotorischen Antriebs, beispielsweise eines elektromotorischen Linearantriebs, in Ausrichtung der Figur 1 gesehen, nach oben und nach unten bewegt werden.

Das erste Bauteil 3 weist eine erste Dicke 11 t₁ und einen ersten Wärmedurchlasswiderstand 13 Rm1 auf. Das zweite Bauteil 5 weist eine zweite Dicke 15 t2 und einen zweiten Wärmedurchlasswiderstand 17 Rₘ₂ auf. Es gelten die Ungleichungen -t₁ ≤ t₂ und -Rₘ₁ ≤ Rₘ₂.

Das erste Bauteil 3 weist einen Schweißflansch 19 auf, der in einem spitzen Winkel an einem Knick 21 in das übrige erste Bauteil 3 übergeht. Zwischen dem ersten Bauteil 3 und dem zweiten Bauteil 5 ergibt sich ein von dem Knick 21 ausgehender, sich konisch öffnender Fügespalt 23. In der Darstellung gemäß der Figur 1 sind die Druckstücke 7 und 9 so weit aneinander angenähert, dass unter einer teilweisen elastischen Verformung des Schweißflansches 19, insbesondere im Bereich des Knickes 21 und bei einer Berührung des Knickes 21 des ersten Bauteils 3 an einer entsprechenden Oberfläche des zweiten Bauteils 5 eine definierte Geometrie des Fügespalts 23 eingestellt ist, wobei eine Öffnung an einem Ausgang des Fügespalts 23 ungefähr 0,25 mm beträgt, wobei eine Länge des Fügespalts 23 ungefähr 10 mm beträgt. Ferner beträgt eine Gesamtblechdicke des ersten Bauteils 3 und des zweiten Bauteils 5 ungefähr 5 - 7 mm.

Die Vorrichtung 1 weist eine in Figur 1 nicht näher dargestellte Strahlquelle 25 zum Erzeugen eines Energiestrahls 27 auf. Bei dem Energiestrahl 27 handelt es sich bevorzugt um einen Laserstrahl. Das erste Druckstück 7 ist hohl ausgeführt, wobei der Energiestrahl 27 durch ein Inneres des ersten Druckstücks 7 hindurchgeführt und durch eine Öffnung aus diesem austritt, wobei der Energiestrahl 27 auf das erste Bauteil 3 trifft.

Die Vorrichtung 1 weist eine nicht näher dargestellte Antriebsvorrichtung 47 zum Verstellen des ersten Druckstücks 7 auf, alternativ und/oder zusätzlich ausgestattet mit einer Positionsregelung, auch bekannt als Zangenhubregelung.

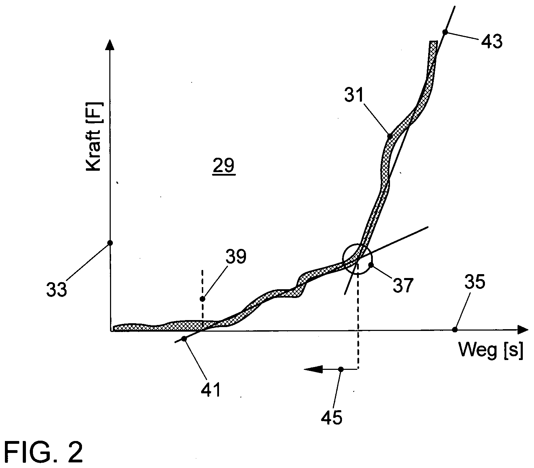

Figur 2 zeigt ein Diagramm 29 eines Verlaufs 31 einer auf eine y-Achse des Diagramms 29 aufgetragenen Kraft 33 über einem auf einer x-Achse des Diagramms 29 aufgetragenen Weg 35. Bei dem Weg 35 handelt es sich um eine Relativbewegung des ersten Druckstücks 7 zu dem fest stehenden zweiten Druckstück 9 der in Figur 1 gezeigten Vorrichtung 1. Bei der Kraft 33 handelt es sich um die dabei zwischen den Druckstücken 7 und 9 auftretende Kraft, wobei diese, sofern sich das erste Bauteil 3 und das zweite Bauteil 5 berühren, über diese übertragen wird beziehungsweise auf diese einwirkt. Es ist zu erkennen, dass der Verlauf 31 zwei Knicke beziehungsweise Steigungsänderungsstellen, nämlich eine Steigungsänderungsstelle 37 und eine weitere Steigungsänderungsstelle 39 aufweist. Die weitere Steigungsänderungsstelle 39 tritt nach einem quasi horizontalen Abschnitt des Verlaufs 31 auf. Dies entspricht einem quasi kraftlosen Verfahren des ersten Druckstücks 7 in Richtung der Bauteile 3 und 5, wobei sich diese noch nicht berühren. An der weiteren Steigungsänderungsstelle 39 beginnen sich die Bauteile 3 und 5 im Bereich des Knicks 21 zu berühren. Ausgehend von der weiteren Steigungsänderungsstelle 39 steigt der Verlauf 31 mit einer ersten Steigung an, was einer zumindest teilweise elastischen Verformung des Schweißflansches 19 entspricht. Dabei wird der konisch verlaufende Fügespalt 23 geschlossen, also der Schweißflansch 19 der Oberfläche des zweiten Bauteils 5 angenähert. Die Annäherung erfolgt solange, bis der Schweißflansch 19 gerade bündig beziehungsweise flächig auf der Oberfläche des zweiten Bauteils 5 aufliegt, so dass der Fügespalt 23 gerade während des Annäherns in einen Nullfügespalt übergeht. In dieser, einer weiteren Relativposition der Druckstücke 7 und 9 zueinander, also bei Vorhandensein des Nullfügespalts tritt die Steigungsänderungsstelle 37 auf, wobei der Verlauf 31 jenseits der Steigungsänderungsstelle 37 eine noch größere Steigung aufweist.

Vorteilhaft kann die Steigungsänderungsstelle 37, die der gerade erreichten weiteren Relativposition der Druckstücke 7 und 9 zueinander, bei der gerade der Nullfügespalt des Fügespalts 23 auftritt, durch Anlegen einer ersten Tangente 41 und einer zweiten Tangente 43 ermittelt werden. Die erste Tangente 41 wird an den Verlauf 31 zwischen den Steigungsänderungsstellen 37 und 39 angelegt. Dies kann beispielsweise mittels eines Regressionsverfahrens erfolgen. Die zweite Tangente 43 wird jenseits der Steigungsänderungsstelle 37 an den Verlauf 31 angelegt, beispielsweise ebenfalls mittels eines Regressionsverfahrens. Die Steigungsänderungsstelle 37 ergibt sich vorteilhaft als Schnittpunkt der ersten Tangente 41 mit der zweiten Tangente 43.

Alternativ und/oder zusätzlich kann auch die weitere Steigungsänderungsstelle 39 ermittelt werden. Dies kann durch Ermitteln eines Schnittpunktes der ersten Tangente 41 mit der den Weg 35 aufweisenden x-Achse des Diagramms 29 erfolgen. Dabei kann davon ausgegangen werden, dass der Verstellweg des ersten Druckstücks 7 bis zur weiteren Steigungsänderungsstelle 39 quasi kraftlos erfolgt.

Vorteilhaft kann ausgehend von der Steigungsänderungsstelle 37 beziehungsweise von der dieser zugrunde liegenden weiteren Relativposition der Druckstücke 7 und 9 zueinander, also ausgehend von dem Nullfügespalt des Fügespalts 23 das erste Druckstück 7 um einen definierten Wert 45 wieder von dem zweiten Druckstück 9 soweit wegbewegt werden, bis die Druckstücke 7, 9 eine für das Fügen erforderliche Relativposition zueinander einnehmen. Vorteilhaft öffnet sich dabei der Fügespalt 23, wobei der konische Verlauf des Fügespalts 23 entsteht, wobei dabei der Schweißflansch 19 durch Rückstellkräfte an dem ersten Druckstück 7 anliegt. Der Wert 45 beträgt ungefähr einen Rückstellweg des ersten Druckstücks 7 von 0,2 mm, insbesondere 0,15 - 0,25 mm, insbesondere 0,1 - 0,3 mm, insbesondere 0,1 - 0,4 mm, insbesondere 0,05 - 0,5 mm.

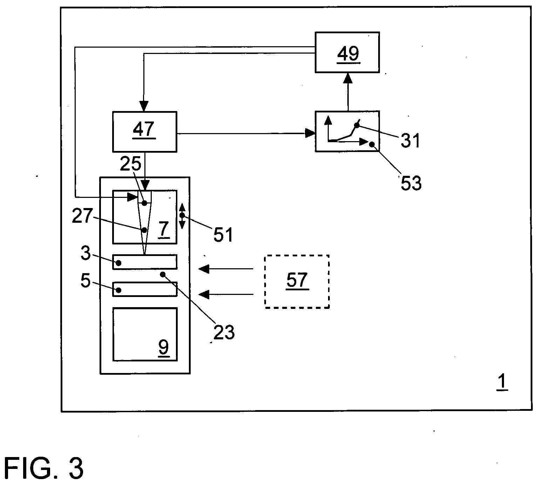

Figur 3 zeigt ein Blockschaltbild einer Steuerung und/oder Regelung der in Figur 1 gezeigten Vorrichtung 1. Gleiche und/oder funktionsgleiche Bauteile sind mit gleichen Bezugszeichen versehen, so dass insofern lediglich auf die Unterschiede eingegangen wird.

Die Vorrichtung 1 weist eine auf das erste Druckstück 7 wirkende Antriebsvorrichtung 47 auf. Mittels der Antriebsvorrichtung 47 kann das erste Druckstück 7 auf das zweite Druckstück 9 zubewegt oder von diesem wegbewegt werden. Der Antriebsvorrichtung 47 ist eine Steuervorrichtung 49 vorgeschaltet, wobei vereinfachenderweise in Figur 3 eine Hilfsenergiequelle zum Betreiben der Antriebsvorrichtung 47 nicht dargestellt ist. Die Steuervorrichtung 49 ist außerdem der Strahlquelle 25 zum Erzeugen des Energiestrahls 27 vorgeschaltet. Mittels der Steuervorrichtung 49 kann der Fügevorgang der Bauteile 3 und 5 gesteuert werden. Ferner weist die Steuervorrichtung 49 eine nicht näher dargestellte Zangenhubregelung auf, beispielsweise eine mit der Antriebsvorrichtung 47 zusammenwirkende Servoregelung zum Verstellen des ersten Druckstücks 7.

Eine Verstellbewegung des ersten Druckstücks 7 ist in Figur 3 mittels eines Doppelpfeils 51 symbolisiert. Vorteilhaft kann der Verlauf 31 der mittels des Doppelpfeils 51 symbolisierten Bewegung mittels einer Analysevorrichtung 53 analysiert werden. Die Analysevorrichtung 53 ist der Antriebsvorrichtung 47 nachgeschaltet und der Steuervorrichtung 49 vorgeschaltet. Die Steuervorrichtung 49 steuert wie vorab beschrieben die Relativposition der Druckstücke 7 und 9 zueinander, bei der der definierte Wert 45 eingestellt ist. Dazu werden zunächst die Druckstücke 7 und 9 über die weitere Steigungsänderungsstelle 39 und zumindest bis zu der Steigungsänderungsstelle 37 bewegt oder gegebenenfalls über diese hinwegbewegt, dann zurückbewegt und ausgehend von der Steigungsänderungsstelle 37, also der weiteren Relativposition zurück auf die für den Fügevorgang vorteilhafte Relativposition. Es wird also bei einem Vorschub zunächst die eigentlich einzustellende Relativposition überfahren. Dann wird die weitere Relativposition erreicht oder gegebenenfalls ebenfalls überfahren. Dann wird in einer Rückbewegung gegebenenfalls erneut die weitere Relativposition in entgegen gesetzter Richtung überfahren oder von dieser ausgehend die Rückbewegung eingeleitet, um so ausgehend von der weiteren Relativbewegung mit der Rückbewegung die einzustellende Relativposition zu erreichen.

Mit Hilfe der Antriebsvorrichtung 47, die beispielsweise als elektromotorische Spanneinheit, insbesondere analog eines elektromotorischen oberen und/oder unteren Arms einer Widerstandspunktschweißzange, können die zwei Bauteile 3 und 5 als Fügepartner, wobei die Bauteile 3 und 5 beispielsweise als verzinkte Bleche ausgeführt sind, überlappend und vorteilhaft ohne mechanische Abstandshalter mit einer hohen Qualität verschweißt werden. Hierbei werden zunächst die zu verschweißenden Bauteile 3 und 5 zwischen dem ersten Druckstück 7 und dem zweiten Druckstück 9 kraftlos positioniert, insbesondere gespannt. Dies kann beispielsweise mit einer adaptiven Position > 0,1 mm, größer als die zu verbindende Gesamtdicke beziehungsweise Blechpaarungsdicke der Bauteile 3 und 5 erfolgen.

Alternativ und/oder zusätzlich ist es denkbar, diese adaptive Position > 0,1 mm derartig einzustellen und/oder zu bestimmen, indem lediglich die weitere Steigungsänderungsstelle 39 mittels der Analysevorrichtung 53 ermittelt wird. In diesem Fall sind die Fügepartner, also die Bauteile 3 und 5, bereits bei der weiteren Steigungsänderungsstelle mit dem Nullspalt des Fügespalts 23 aneinander angelegt. In diesem Fall kann der Schweißflansch entsprechend parallel zu dem zweiten Bauteil 5 ausgeführt sein, so dass die zumindest teilelastische Verformung entfällt. Von diesem Punkt aus erfolgt dann das Zurückziehen des ersten Druckstücks 7, wobei es nicht erforderlich ist, dass sich dabei das erste Bauteil 3 auch mit zurückbewegt. Vorteilhaft kann auf die so eingelegten Bauteile 3 und 5 der Energiestrahl 27 gerichtet werden. Vorteilhaft entsteht dadurch ein Laserschmelzbad mit einer Blaswirkung beziehungsweise einem Dampfdruck der dadurch verdampfenden Beschichtung, was vorteilhaft die Bauteile 3 und 5 auseinanderdrückt, so dass diese zuverlässig an die Druckstücke 7 und 9 angelegt werden, wodurch sich vorteilhaft die adaptive Position und dadurch der mit dem Wert 45 versehene Fügespalt 23 einstellt. Vorteilhaft entspricht der Fügespalt 23 dann der über die zu verbindende Blechpaarungsdicke hinausgehende Distanz der Druckstücke 7 und 9.

Alternativ und/oder zusätzlich kann der Knick 21 den spitzen Winkel aufweisen, so dass zunächst die zumindest teilelastische Verformung des Schweißflansches 19 erfolgt, so dass also die Steigungsänderungsstelle 37 und die weitere Steigungsänderungsstelle 39 an dem Verlauf 31 auftreten beziehungsweise ermittelbar sind. Vorteilhaft entsteht dadurch der einseitig, konisch, von dem Knick 21 ausgehende geöffnete Fügespalt 23. Dieser reicht vorteilhaft nachweisbar aus, die Entgasung sicherzustellen, um eine gute Schweißnahtverbindung zu ermöglichen.

Alternativ und/oder zusätzlich kann bei den definierten Vorspannungen eine durch eine Abschrägung 55 des ersten Druckstücks 7 erzeugbare Winkelanstellung des Schweißflansches 19 vorgesehen sein. Vorteilhaft kann dadurch alternativ und/oder zusätzlich ein Anpassen einer geometrischen Form des ersten Druckstücks auf die zu erzeugende Spaltform des Fügespalts 23, also die einseitig geöffnete Form, erzeugt werden.

Gemäß der in Figur 3 gezeigten Regelung und/oder Steuerung zur Findung einer exakten Spannposition der Bauteile 3 und 5 zwischen den Druckstücken 7 und 9 fährt zunächst das erste Druckstück 7 zu, wird also an das zweite Druckstück 9 angenähert. Dabei wird der Verlauf 31 des in Figur 2 dargestellten Kraft-Weg-Diagramms 29 mittels der Analysevorrichtung 53 aufgenommen. Sobald das erste Druckstück 7 mit dem ersten Bauteil 3 Kontakt bekommt und/oder der Knick 21 des ersten Bauteils 3 an dem zweiten Bauteil 5 kraftübertragend anliegt, so steigt die Kraft 33 ausgehend von der weiteren Steigungsänderungsstelle 39 an. Sobald die Bauteile 3 und 5 bündig, also mit dem Nullspalt des Fügespalts 23 aneinander anliegen, so steigt die Kraft 33 steiler an, was jenseits beziehungsweise ab der Steigungsänderungsstelle 37 der Fall ist. Durch das Anlegen der Tangenten 41 und 43 an den Verlauf 31, der insbesondere eine Messkurve darstellt, und die Bestimmung des Schnittpunktes der Tangenten 41 und 43, lässt sich vorteilhaft ein für unterschiedliche Dicken 11 und 15 der Bauteile 3 und 5 charakteristischer Punkt bestimmen, von dem aus durch ein leichtes Öffnen der Druckstücke 7 und 9, die beispielsweise Teil einer Spannzange sind, die definierte Spaltsituation für das prozesssichere Verschweißen von unterschiedlichsten Blechdickenkombinationen erreichen. Das leichte Öffnen erfolgt mit dem Wert 45. Vorteilhaft muss in der Steuervorrichtung 49 der Vorrichtung 1 kein fügestellenabhängiger Blechdickenwert 11, 15 der Bauteile 3, 5 hinterlegt beziehungsweise programmiert werden. Zum Einlegen und Entnehmen der Bauteile 3 ,5 kann optional eine in Figur 3 gestrichelt dargestellte Mechanisierung 57 vorgesehen sein.

### Bezugszeichenliste

- 1: Vorrichtung
- 3: erstes Bauteil
- 5: zweites Bauteil
- 7: erstes Druckstück
- 9: zweites Druckstück
- 11: erste Dicke
- 13: erster Wärmedurchlasswiderstand
- 15: zweite Dicke
- 17: zweiter Wärmedurchlasswiderstand
- 19: Schweißflansch
- 21: Knick
- 23: Fügespalt
- 25: Strahlquelle
- 27: Energiestrahl
- 29: Diagramm
- 31: Verlauf
- 33: Kraft
- 35: Weg
- 37: Steigungsänderungsstelle
- 39: Steigungsänderungsstelle
- 41: Tangente
- 43: Tangente
- 45: Wert
- 47: Antriebsvorrichtung
- 49: Steuervorrichtung
- 51: Doppelpfeil
- 53: Analysevorrichtung
- 55: Abschrägung
- 57: Mechanisierung

## Patentansprüche

1. *Verfahren zum Fügen eines ersten Bauteils (3) mit einem zweiten Bauteil (5) mittels eines Energiestrahlschweißens, wobei zumindest eines der Bauteile (3,5) eine während des Energiestrahlschweißens bereichsweise verdampfende Beschichtung aufweist, mit:*
- *Positionieren des ersten Bauteils (3) und des zweiten Bauteils (5) zwischen einem ersten Druckstück (7) und einem zweiten Druckstück* (9), **gekennzeichnet durch** folgende Schritte :
- *Annähern der Druckstücke (7,9) aneinander und dabei*
- *Berühren der Bauteile (3,5) an einem Knick (21) eines Schweißflansches (19) des ersten Bauteils (3) und dabei*
- *Erzeugen eines sich von dem Knick (21) ausgehend konisch öffnenden Fügespalts (23) zwischen den Bauteilen (3,5) **durch***
- *Analysieren eines eine zwischen den Druckstücken (7,9) auftretende Kraft (33) charakterisierenden Verlaufs (31) **durch** Ermitteln einer Steigungsänderungsstelle (37) des Verlaufs **durch** Schließen des Fügespalts (23) unter einer zumindest teilelastischen Verformung des Schweißflansches (19) mittels des Annäherns der Druckstücke (7, 9) aneinander, wobei die ermittelte Steigungsänderungsstelle (37) bei gerade zu einem Nullspalt geschlossenem Fügespalt (23) auftritt, und*
- *Definiertes Öffnen des Fügespalts (23) mittels Einstellen einer Relativposition der Druckstücke (7,9) zueinander in Abhängigkeit der Analyse **durch** Auseinanderbewegen der Druckstücke (7,9) um einen definierten Wert (45) und ausgehend von einer weiteren Relativposition der Druckstücke (7,9) zueinander, an der die Steigungsänderungsstelle (37) des Verlaufs auftritt,*
- *Fügen der Bauteile (3,5) mittels des Energiestrahlschweißens bei der eingestellten Relativposition der Druckstücke (7,9).*

2. Verfahren nach Anspruch 1, mit:
- Anlegen der Bauteile (3, 5) an das jeweilige Druckstück (7, 9) mittels eines während des Energiestrahlschweißens auftretenden Dampfdrucks der bereichsweise verdampfenden Beschichtung.

3. Verfahren nach einem der vorhergehenden Ansprüche, mit:
- Vorspannen des ersten Bauteils (3) mittels einer Abschrägung (55) des ersten Druckstücks (7).

4. Verfahren nach einem der vorhergehenden Ansprüche, mit:
- Ermitteln des Verlaufs (31) als ein Kraft-Weg-Diagramm (29) der Druckstücke (7, 9).

5. Verfahren nach einem der vorhergehenden drei Ansprüche, mit zumindest einem des Folgenden:
- Ermitteln einer weiteren Steigungsänderungsstelle (39), die bei einem Beginn der Berührung der Bauteile (3, 5) an dem Knick (21) des Schweißflansches (19) während des Annäherns auftritt,
- Anlegen von zwei Tangenten (41, 43) an den Verlauf,
- Ermitteln der Steigungsänderungsstelle (37) als ein Schnittpunkt der Tangenten (41,43).

6. Verfahren nach einem der vorhergehenden Ansprüche1 - 5, mit:
- Auseinanderbewegen der Druckstücke (7, 9) um den definierten Wert (45) zumindest eines der folgenden Intervalle: 0,05 - 0,5 mm, 0,1 - 0,4 mm, 0,1 - 0,3 mm, 0,15 - 0,25 mm, vorzugsweise 0,2 mm.

7. Verfahren nach einem der vorhergehenden Ansprüche, wobei eine erste Dicke (11) und/oder ein erster Wärmedurchlasswiderstand (13) des ersten Bauteils (3) kleiner ist/sind als eine zweite Dicke (15) und/oder ein zweiter Wärmedurchlasswiderstand (17) des zweiten Bauteils, mit:
- Richten eines Energiestrahls (27) auf eine Rückseite des ersten Bauteils (3) zum Fügen der Bauteile (3, 5).

8. Vorrichtung zum Fügen eines ersten, einen *Schweißflansch (19) aufweisenden* Bauteils (3) mit einem zweiten Bauteil (5) mittels Energiestrahlschweißens, wobei zumindest eines der Bauteile (3, 5) eine während des Energiestrahlschweißens bereichsweise verdampfende Beschichtung aufweist, mit:
- einem ersten und einem zweiten Druckstück (7, 9), zwischen denen das erste und das zweite Bauteil (3, 5) positionierbar sind,
- einer Antriebsvorrichtung (47), mittels der die Druckstücke (7, 9) aneinander, bis zu einem *Berühren der Bauteile (3,5) an einem Knick (21) des Schweißflansches (19) des ersten Bauteils (3)* annäherbar und ein *sich von dem Knick (21) ausgehend konisch öffnender Fügespalt (23) zwischen den Bauteilen (3,5) erzeugbar* ist, und **gekennzeichnet durch** folgende Merkmale:
- eine Analysevorrichtung (53), mittels der ein eine zwischen den Druckstücken (7,9) auftretende Kraft (33) charakterisierender Verlauf (31) ***durch** Ermitteln einer Steigungsänderungsstelle (37) des Verlaufs beim Schließen des Fügespalts (23) unter einer zumindest teilelastischen Verformung des Schweißflansches (19) mittels des Annäherns der Druckstücke (7, 9) aneinander,* analysierbar ist, *wobei die ermittelte Steigungsänderungsstelle (37) bei gerade zu einem Nullspalt geschlossenem Fügespalt (23) auftritt,*
- eine Steuervorrichtung (49), mittels der die Antriebsvorrichtung (47) zum Einstellen einer Relativposition der Druckstücke (7,9) zueinander in Abhängigkeit von der Analyse des Verlaufs (31) mittels der Analysevorrichtung (53) ansteuerbar ist.

## Claims

1. Method for joining a first component (3) to a second component (5) by means of energy beam welding, wherein at least one of the components (3, 5) has a coating that evaporates in some areas during the energy beam welding, comprising:
- positioning the first component (3) and the second component (5) between a first pressure piece (7) and a second pressure piece (9), **characterized by** the following steps:
- moving the pressure pieces (7, 9) towards one another and thereby
- bringing the components (3, 5) into contact at a bend (21) of a welding flange (19) of the first component (3) and thereby
- creating a joining gap (23) that opens out conically from the bend (21) between the components (3, 5) by
- analyzing a curve (31) that characterizes a force (33) occurring between the pressure pieces (7, 9) by ascertaining a point of slope change (37) of the curve by closing the joining gap (23) under at least partially elastic deformation of the welding flange (19) by means of the moving of the pressure pieces (7, 9) towards one another, the ascertained point of slope change (37) occurring just as the joining gap (23) closes to no gap, and
- defined opening of the joining gap (23) by means of setting a relative position of the pressure pieces (7, 9) in relation to one another in dependence on the analysis by moving the pressure pieces (7, 9) apart from one another by a defined value (45) and on the basis of a further relative position of the pressure pieces (7, 9) in relation to one another at which the point of slope change (37) of the curve occurs,
- joining the components (3, 5) by means of the energy beam welding in the set relative position of the pressure pieces (7, 9).

2. Method according to Claim 1, comprising:
- placing the components (3, 5) against the respective pressure piece (7, 9) by means of a vapour pressure of the coating that evaporates in some areas occurring during the energy beam welding.

3. Method according to one of the preceding claims, comprising:
- pre-stressing the first component (3) with the aid of a chamfer (55) of the first pressure piece (7).

4. Method according to one of the preceding claims, comprising:
- ascertaining the curve (31) as a force-path diagram (29) of the pressure pieces (7, 9).

5. Method according to one of the preceding three claims, comprising at least one of the following:
- ascertaining a further point of slope change (39), which occurs when the components (3, 5) begin to make contact at the bend (21) of the welding flange (19) while they are being moved towards one another,
- applying two tangents (41, 43) to the curve,
- ascertaining the point of slope change (37) as a point of intersection of the tangents (41, 43).

6. Method according to one of the preceding Claims 1 - 5, comprising:
- moving the pressure pieces (7, 9) apart by the defined value (45) of at least one of the following intervals: 0.05-0.5 mm; 0.1-0.4 mm, 0.1-0.3 mm, 0.15-0.25 mm, preferably 0.2 mm.

7. Method according to one of the preceding claims, a first thickness (11) and/or a first heat transfer resistance (13) of the first component (3) being smaller than a second thickness (15) and/or a second heat transfer resistance (17) of the second component, comprising:
- directing an energy beam (27) onto a rear side of the first component (3) for joining the components (3, 5).

8. Device for joining a first component (3), having a welding flange (19), to a second component (5) by means of energy beam welding, at least one of the components (3, 5) having a coating that evaporates in some areas during the energy beam welding, comprising:
- a first and a second pressure piece (7, 9), between which the first and the second component (3, 5) can be positioned,
- a drive device (47), by means of which the pressure pieces (7, 9) can be moved towards one another until the components (3, 5) are brought into contact at a bend (21) of the welding flange (19) of the first component (3) and a joining gap (23) that opens out conically from the bend (21) can be created between the components (3, 5),
and **characterized by** the following features:
- an analysis device (53), by means of which a curve (31) that characterizes a force (33) occurring between the pressure pieces (7, 9) can be analyzed by ascertaining a point of slope change (37) of the curve while closing the joining gap (23) under at least partially elastic deformation of the welding flange (19) by means of the moving of the pressure pieces (7, 9) towards one another, the ascertained point of slope change (37) occurring just as the joining gap (23) closes to no gap, and
- a control device (49), by means of which the drive device (47) can be activated for setting a relative position of the pressure pieces (7, 9) in relation to one another in dependence on the analysis of the curve (31) by means of the analysis device (53).

## Revendications

1. Procédé pour l'assemblage d'une première pièce (3) à une deuxième pièce (5) par soudage au moyen d'un faisceau d'énergie, dans lequel au moins une des pièces (3, 5) présente un revêtement se vaporisant localement pendant le soudage par un faisceau d'énergie, dans lequel
- on positionne la première pièce (3) et la deuxième pièce (5) entre un premier élément de pression (7) et un deuxième élément de pression (9),
**caractérisé par** les étapes suivantes:
- rapprocher les éléments de pression (7, 9) l'un de l'autre et ainsi
- toucher les pièces (3, 5) à un pli (21) d'une aile de soudage (19) de la première pièce (3) et ainsi
- produire une fente d'assemblage (23) s'ouvrant en forme de cône à partir du pli (21) entre les deux pièces (3, 5)
- en analysant une courbe (31) caractérisant une force (33) générée entre les éléments de pression (7, 9) en déterminant un point de changement de pente (37) de la courbe par fermeture de la fente d'assemblage (23) sous une déformation au moins partiellement élastique de l'aile de soudage (19) au moyen du rapprochement des éléments de pression (7, 9) l'un contre l'autre, dans lequel le point de changement de pente déterminé (37) se produit exactement pour une fente de soudage (23) fermée en une fente nulle, et
- ouvrir de façon définie la fente d'assemblage (23) par le réglage d'une position relative des éléments de pression (7, 9) l'un par rapport à l'autre en fonction de l'analyse en écartant les éléments de pression (7, 9) d'une valeur définie (45) et en partant d'une autre position relative des éléments de pression (7, 9) l'un par rapport à l'autre, pour laquelle le point de changement de pente (37) de la courbe se produit,
- assembler les pièces (3, 5) par soudage au moyen d'un faisceau d'énergie dans la position relative réglée des éléments de pression (7, 9).

2. Procédé selon la revendication 1, comprenant l'étape suivante:
- appliquer les pièces (3, 5) sur l'élément de pression respectif (7, 9) au moyen d'une pression de vapeur du revêtement qui se vaporise localement, générée pendant le soudage par faisceau d'énergie.

3. Procédé selon l'une quelconque des revendications précédentes, comprenant l'étape suivante:
- précontraindre la première pièce (3) au moyen d'une face oblique (55) du premier élément de pression (7).

4. Procédé selon l'une quelconque des revendications précédentes, comprenant l'étape suivante:
- déterminer la courbe (31) sous la forme d'un diagramme force-course (29) des éléments de pression (7, 9).

5. Procédé selon l'une quelconque des trois revendications précédentes, comprenant au moins une des étapes suivantes:
- déterminer un autre point de changement de pente (39), qui se produit lors d'un début de contact des pièces (3, 5) au pli (21) de l'aile de soudage (19) pendant le rapprochement,
- tracer deux tangentes (41, 43) sur la courbe,
- déterminer le point de changement de pente (37) comme étant un point d'intersection des tangentes (41, 43).

6. Procédé selon l'une quelconque des revendications précédentes 1 à 5, comprenant l'étape suivante:
- écarter les éléments de pression (7, 9) de la valeur définie (45) d'au moins un des intervalles suivants: 0,05 - 0,5 mm; 0,1 - 0,4 mm; 0,1 - 0,3 mm; 0, 15 - 0,25 mm; de préférence de 0,2 mm.

7. Procédé selon l'une quelconque des revendications précédentes, dans lequel une première épaisseur (11) et/ou une première résistance au passage de chaleur (13) de la première pièce (3) est/sont plus petite(s) qu'une deuxième épaisseur (15) et/ou une deuxième résistance au passage de chaleur (17) de la deuxième pièce, comprenant l'étape suivante:
- diriger un faisceau d'énergie (27) sur une face arrière de la première pièce (3) pour assembler les pièces (3, 5).

8. Dispositif pour l'assemblage d'une première pièce (3) présentant une aile de soudage (19) à une deuxième pièce (5) par soudage au moyen d'un faisceau d'énergie, dans lequel au moins une des pièces (3, 5) présente un revêtement se vaporisant localement pendant le soudage par un faisceau d'énergie, avec:
- un premier et un deuxième éléments de pression (7, 9), entre lesquels la première et la deuxième pièces (3, 5) peuvent être positionnées;
- un dispositif d'entraînement (47), au moyen duquel les éléments de pression (7, 9) peuvent être rapprochés l'un de l'autre jusqu'à un contact des pièces (3, 5) à un pli (21) de l'aile de soudage (19) de la première pièce (3) et une fente d'assemblage (23) s'ouvrant en forme de cône à partir du pli (21) peut être produite entre les pièces (3, 5),
et **caractérisé par** les caractéristiques suivantes:
- un dispositif d'analyse (53), au moyen duquel une courbe (31) caractérisant une force (33) générée entre les éléments de pression (7, 9) peut être analysée en déterminant un point de changement de pente (37) de la courbe lors de la fermeture de la fente d'assemblage (23) sous une déformation au moins partiellement élastique de l'aile de soudage (19) au moyen du rapprochement des éléments de pression (7, 9) l'un vers l'autre, dans lequel le point de changement de pente déterminé (37) se produit exactement pour une fente de soudage (23) fermée en une fente nulle,
- un dispositif de commande (49), au moyen duquel le dispositif d'entraînement (47) peut être commandé pour le réglage d'une position relative des éléments de pression (7, 9) l'un par rapport à l'autre en fonction de l'analyse de la courbe (31) au moyen du dispositif d'analyse (53).
